# EUROPÄISCHE PATENTSCHRIFT

(11) **EP 1 396 332 B1**
(45) Veröffentlichungstag und Bekanntmachung des Hinweises auf die Patenterteilung: **30.09.2009**
(21) Anmeldenummer: 03012959.7
(22) Anmeldetag: 07.06.2003
(51) Int. Cl.: B29C 47/06, B29C 47/02

(54) **Profilkörper aus Kunststoff- und Pflanzenmaterial**
Profile member made of plastic and plant material
Corps profilé en plastique et matière végétale

(30) Priorität: 03.09.2002 DE 20213499 U
(43) Veröffentlichungstag der Anmeldung: 10.03.2004
(73) Patentinhaber: Hachtel, Friedrich, 73431 Aalen (DE); Hachtel, Steffen, 73650 Winterbach (DE)
(72) Erfinder: Hachtel,Steffen, 73650 Winterbach (DE)
(74) Vertreter: Möbus, Daniela

(56) Entgegenhaltungen:
- EP-A- 0 292 584
- WO-A-03/020803
- DE-C- 19 852 082
- US-A- 5 082 605
- US-A- 5 858 522
- US-A- 5 882 564
- US-A- 6 083 601
- US-B1- 6 265 037

## Beschreibung

Zur Fertigung von Profilkörpern, nämlich Vorhangstangen oder Fensterrahmenprofilen ist es bisher üblich, einen Kern aus massivem Holz oder aus Pressspan herzustellen, in dem die gewünschte Form aus dem Holz oder einer Pressspanplatte ausgefräst oder ausgesägt wird. Anschließend wird dieser Kern in einem Extrusionsverfahren mit Kunststoff, beispielsweise mit PVC ummantelt. Die Herstellung dieser Profilkörper ist also zweistufig. Darüber hinaus sind die beiden Fertigungsstufen hinsichtlich der dafür benötigten maschinellen Ausstattung grundverschieden. Die Fertigung des Kerns beinhaltet einen Sägeoder Fräsvorgang, während die Ummantelung mittels eines Kunststoffextrusionsverfahrens erfolgt.

Aus US 6,083,601 ist ein extrudiertes Produkt bekannt geworden, das einen geschäumten Kern mit Zelluloseanteilen und einer Hülle aufweist, die aus einem thermoplastischen Kunststoff gebildet ist. Als Hülle werden Kunststoffe wie PVC, ABS und Polycarbonate verwendet. Verschieden geschäumte Kerne werden beschrieben, die jeweils von einer thermoplastischen Kunststoffhülle überzogen sind.

US 6,265,037 offenbart eine extrudierte Hohlprofilstruktur, die aus einem Verbundwerkstoff bestehend aus Polyolefin und Holzspänen hergestellt ist. Die Hohlprofilstruktur hat gegenüber vergleichbaren Gegenständen aus Holz, Metall oder Kunststoff verbesserte Materialeigenschaften, die das Gefüge, die thermische Belastung und die Verarbeitung betreffen.

Weiterhin ist aus US 5,858,522 ein Verbundwerkstoff bekannt geworden, aus dem Fensterrahmen und Türen hergestellt werden können. Der Verbundwerkstoff setzt sich aus einem Kern bestehend aus Holzmehl und Kunststoff und einer Überzugsschicht, beispielsweise aus PVC, zusammen.

Ferner ist aus DE 198 52 082 C1 ein Verbundprofil bekannt geworden, das aus wenigstens einem synthetischen Polymer und einem im Wesentlichen aus Lignin bestehenden Innenprofil-Werkstoff koextrudiert ist. Auf die Außenseite des Verbundprofils kann aus einem synthetischen Polymer eine Deckschicht in Form einer Folie, eines Furniers oder dergleichen zusätzlich aufgebracht werden.

Der vorliegenden Erfindung liegt die Aufgabe zugrunde, einen zweischichtigen Profilkörper vorzuschlagen, der einfacher und kostengünstiger in der Herstellung ist, wobei der Profilkörper vollständig biologisch abbaubar ist.

Die Aufgabe wird mit einem als Vorhangschiene oder Fensterrahmenprofil ausgebildeten Profilkörper mit einem Kern aus in ein thermoplastisches Material eingebundenem zerkleinertem Pflanzenmaterial und einer Deckschicht aus einem biologisch abbaubaren Kunststoffmaterial gelöst, wobei Kern und Deckschicht koextrudiert sind. Durch die Herstellung des Kerns aus Pflanzenmaterial in Kombination mit einem Thermoplast kann das Kernmaterial ähnlich wie ein Kunststoff extrudiert werden. Als Pflanzenmaterial kommen dabei beispielsweise Sägemehl oder Holzschnitzel oder auch Naturfaserstoffe infrage. Als thermoplastisches Material werden Natur- oder Kunststoffharze als Deckschicht eingesetzt, die biologisch abbaubar sind. Das Kernmaterial aus einem solchen Stoff ist günstiger als ein Kern aus Holz oder aus einer Holzspanplatte. Dabei kann der Pflanzenmaterialwerkstoff auch als Hohlprofil und in nahezu beliebiger Geometrie gefertigt werden.

Darüber hinaus ist es durch die Extrudierbarkeit des Kermaterials möglich, einen Profilkörper zu schaffen, bei dem der Kern und die Deckschicht koextrudiert sind. Das Fertigungsverfahren eines erfindungsgemäßen Profilkörpers kann dann in einem einzigen Schritt durchgeführt werden. Es werden dazu auch nicht verschiedene Werkzeug- oder Maschinentypen benötigt, sondern nur eine Koextrusionsvorrichtung. Koextrusionsverfahren sind zur Verarbeitung verschiedener Kunststoffe bereits bekannt. Neu ist jedoch die Koextrusion des Pflanzenmaterialwerkstoffs als Kern mit einem Kunststoff als Deckschicht, der biologisch abbaubar ist.

Der Kern kann überwiegend aus Holzspänen bestehen, doch lassen sich auch andere Stoffe wie Getreidespelze, Stroh, Bambus oder Kokosfasern verwenden.

Der gesamte Profilkörper ist vollständig recycelbar und biologisch abbaubar, weil auch die Deckschicht aus einem biologisch abbaubaren Kunststoff gefertigt ist.

Die Deckschicht kann den Kern allseitig oder auch nur bereichsweise umgeben.

Handelt es sich bei dem Profilkörper um eine Vorhangschiene, so ergeben sich gegenüber der klassischen Fertigung von Vorhangschienen mit Holz- oder Spanplattenkernen enorme Zeit- und Kostenvorteile. Ein Kern aus extrudiertem Pflanzenmaterial ist außerdem einem Kern aus einer Spanplatte hinsichtlich der Festigkeit überlegen.

Der erfindungsgemäße Profilkörper lässt sich auch mit Vorteil als Fensterrahmenprofil einsetzen. Es können damit die Vorteile eines Kunststofffensters mit der Technologie eines Holzfensters verknüpft werden. Im Außenbereich kann z. B. ein witterungsbeständiger Kunststoffmantel verwendet werden, während als Kern ein kostengünstiger extrudierter Holzkern, ein so genannter Formholzkern, verwendet werden kann. Der Formholzkern kann auch eingefärbt werden, indem bei der Extrusion entsprechende Farbpigmente mit eingemischt werden.

## Patentansprüche

1. Vorhangschiene oder Fensterrahmenprofil mit einem Kern aus in ein thermoplastisches Material eingebundenen zerkleinerten Pflanzenmaterial und einer Deckschicht aus einem Kunststoffmaterial, wobei Kern und Deckschicht koextrudiert sind und **dadurch gekennzeichnet, dass** die Deckschicht aus einem biologisch abbaubaren Kunststoff besteht.

2. Vorhangschiene oder Fensterrahmenprofil nach Anspruch 1, **dadurch gekennzeichnet, dass** der Kern überwiegend aus Holzspänen besteht.

3. Vorhangschiene oder Fensterrahmenprofil nach Anspruch 1 oder 2, **dadurch gekennzeichnet, dass** die Deckschicht den Kern allseits umgibt.

4. Vorhangschiene oder Fensterrahmenprofil nach Anspruch 1 oder 2, **dadurch gekennzeichnet, dass** die Deckschicht den Kern nur bereichsweise umgibt.

5. Vorhangschiene oder Fensterrahmenprofil nach einem der Ansprüche 1 bis 4, **dadurch gekennzeichnet, dass** er ein Hohlprofilkörper ist.

## Claims

1. Curtain rail or window frame profile with a core made of comminuted plant material bound into a thermoplastic material and with a covering layer made of a plastic material, core and covering layer being coextruded, **characterised in that** the covering layer consists of a biodegradable plastic.

2. Curtain rail or window frame profile according to Claim 1, **characterised in that** the core consists predominantly of wood chips.

3. Curtain rail or window frame profile according to either of Claims 1 and 2, **characterised in that** the covering layer surrounds the core on all sides.

4. Curtain rail or window frame profile according to either of Claims 1 and 2, **characterised in that** the covering layer surrounds the core only zonally.

5. Curtain rail or window frame profile according to any one of Claims 1 to 4, **characterised in that** it is a hollow-profile body.

## Revendications

1. Rail de rideau ou profilé de cadre de fenêtre comprenant un noyau constitué d'un matériau végétal broyé incorporé à un matériau thermoplastique et d'une couche de recouvrement en matériau synthétique, dans lequel le noyau et la couche de recouvrement sont co-extrudés, **caractérisé en ce que** la couche de recouvrement est constituée d'un matériau synthétique biodégradable.

2. Rail de rideau ou profilé de cadre de fenêtre selon la revendication 1, **caractérisé en ce que** le noyau est constitué principalement de copeaux de bois.

3. Rail de rideau ou profilé de cadre de fenêtre selon l'une quelconque des revendications 1 à 2, **caractérisé en ce que** la couche de recouvrement entoure le noyau de toutes parts.

4. Rail de rideau ou profilé de cadre de fenêtre selon l'une quelconque des revendications 1 à 2, **caractérisé en ce que** la couche de recouvrement n'entoure le noyau que par segments.

5. Rail de rideau ou profilé de cadre de fenêtre selon l'une quelconque des revendications 1 à 4, **caractérisé en ce qu'**il s'agit d'un corps de profilé creux.
